(19) **Europäisches Patentamt**
**European Patent Office**
**Office européen des brevets**

(11) **EP 4 235 695 A1**

(12) **EUROPEAN PATENT APPLICATION**
published in accordance with Art. 153(4) EPC

(43) Date of publication:
**30.08.2023 Bulletin 2023/35**

(21) Application number: **20935086.7**

(22) Date of filing: **09.12.2020**

(51) International Patent Classification (IPC):
*G21C 17/07* (2006.01)     *G21C 17/14* (2006.01)
*G21D 1/02* (2006.01)

(52) Cooperative Patent Classification (CPC):
Y02E 30/00; Y02E 30/30

(86) International application number:
**PCT/CN2020/134716**

(87) International publication number:
**WO 2021/227467 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020 CN 202011050419**

(71) Applicants:
- **China Nuclear Power Engineering Co., Ltd.
 Shenzhen, Guangdong 518124 (CN)**
- **China General Nuclear Power Corporation
 Shenzhen, Guangdong 518026 (CN)**
- **CGN Power Co., Ltd.
 Shenzhen, Guangdong 518026 (CN)**

(72) Inventors:
- **GUO, Run chun
 Shenzhen, Guangdong 518124 (CN)**
- **WEI, Xue hu
 Shenzhen, Guangdong 518124 (CN)**
- **CHEN, Xiao qiang
 Shenzhen, Guangdong 518124 (CN)**
- **XIONG, Jun
 Shenzhen, Guangdong 518124 (CN)**
- **YIN, Shu hua
 Shenzhen, Guangdong 518124 (CN)**

(74) Representative: **Greaves Brewster LLP
Copa House
Station Road
Cheddar, Somerset BS27 3AH (GB)**

(54) **ONLINE MEASUREMENT APPARATUS AND METHOD FOR INERT GAS IN GASEOUS EFFLUENT FROM NUCLEAR FACILITY**

(57) The present invention provides an online measurement apparatus and method for inert gas in a gaseous effluent from a nuclear facility. The online measurement apparatus includes a shielding apparatus (10), a sampling system (20), a sampling container (30) and an in-situ gamma spectrometer system (40), wherein the sampling container (30) includes a sample gas inlet and a sampling port, the in-situ gamma spectrometer system (40) includes a detector (41) and a digital spectrometer (42). The shielding apparatus (10) is arranged outside the sampling container (30) in a covering manner. The sampling system (20) is in communication with the sample gas inlet to convey a gaseous effluent to be tested to the sampling container (30). The detector (41) is arranged at a position close to the sampling port to test the gaseous effluent in the sampling container (30), and send a testing signal obtained by testing to the digital spectrometer (42). By means of the online measurement apparatus and method, the type and the activity concentration of a radionuclide in a gaseous effluent sample can be directly measured and, therefore, the activity concentration of a radioactive inert gas in the effluent can be calculated, thereby satisfying the requirements relating to gaseous radioactive effluent monitoring.

Fig. 1

**Description**

**FIELD OF THE INVENTION**

The present invention generally relates to the field of nuclear power plants and, more particularly, relates to an on-line measurement apparatus and method for inert gas in gaseous effluent from a nuclear facility.

**BACKGROUND OF THE INVENTION**

As a safe, reliable and clean energy, nuclear power has become an important part of the power industry. At present, the nuclear power industry is developing rapidly, and the number of nuclear power units in operation will continue to rise in the future.

With the rapid development of nuclear power in domestic and abroad and the warning of the Japanese Fukushima nuclear accident in 2011, the dose effects of gaseous radioactive effluents on the environment and the public are also receiving increasing attention from the country and the people living near the nuclear power plant.

At present, the methods for monitoring gaseous effluent are mainly divided into on-line measurement and laboratory sampling measurement. On-line measurement is mainly used for real-time monitoring, mainly by β-ray measurement of the total radioactivity in the effluent, and gives an equivalent $^{133}$Xe emission. The laboratory sampling measurement is taken in an off-line measurement mode, and the nuclear facility laboratory takes periodic samples of the effluents and measures the gamma energy spectrum, the measurement result is considered to be the average of the emission for the period.

For on-line measurement, the main problem of the prior art lies in that the on-line β-ray measurement cannot distinguish types of the nuclide, can only obtain a total emission activity, and cannot meet the requirements of relevant international guidelines and regulations. With the increase of $^{85}$Kr concentration in the atmosphere in recent decades, the emission of $^{85}$Kr from the effluent of nuclear facilities has been paid more and more attention by the government and relevant departments and, therefore, nuclide resolution becomes an important improvement in monitoring gaseous effluents from nuclear facilities.

The main problem of the measurement methods of laboratory sampling measurement include low sampling frequency, inability to assess the activity of gaseous radioactive effluents from the nuclear facilities in real time, and inability to reflect some accidental emissions. According to GB 6249-2011 "Regulations on environmental radiation protection in nuclear power plants", for radionuclide below the detection limit, one-half of the detection limitation is taken as the concentration of the nuclide. In some nuclear power plants, the lower detection limit for inert gases is much higher than the actual activity of radioactive inert gases (especially for the measurement of $^{85}$Kr). The emission difference of units of the same reactor type according to the above-mentioned national standards is very large, which may lead to wide variations in environmental and residential dose assessments and does not meet internationally recommended monitoring standards.

**SUMMARY OF THE INVENTION**

One object of the present invention is to provide an online measurement apparatus for inert gas in a gaseous effluent from a nuclear facility aiming at the problems and deficiencies mentioned above, which can on-line measure the type and activity concentration of inert gas radionuclide in the gaseous effluent of nuclear facilities.

According to one embodiment of the present invention, an online measurement apparatus for inert gas in a gaseous effluent from a nuclear facility includes:
a shielding apparatus, a sampling system, a sampling container and an in-situ gamma spectrometer system, wherein the sampling container includes a sample gas inlet and a sampling port, the in-situ gamma spectrometer system includes a detector and a digital spectrometer, the shielding apparatus is arranged outside the sampling container in a covering manner, the sampling system is in communication with the sample gas inlet to convey a gaseous effluent to be tested to the sampling container, the detector is arranged at a position close to the sampling port to test the gaseous effluent in the sampling container, and send a testing signal obtained by testing to the digital spectrometer.

Preferably, the sampling system includes a sampling nozzle for connection to a chimney, a sampling line and a first suction device, one end of the sampling pipeline is connected to the sampling nozzle, the other end of the sampling pipeline is connected to the sample gas inlet, and the first suction device is arranged on the sampling line.

Preferably, the shielding apparatus has a cylindrical shape and a shell of the shielding apparatus includes a first metal layer, a second metal layer and a third metal layer, the first metal layer is a steel layer having a thickness of 2mm, the second metal layer is a lead layer having a thickness of 100 mm, and the third metal layer is a copper layer having a thickness of 2mm.

Preferably, the sampling container is a Marin cup sampling container.

Preferably, the sampling container also includes a nitrogen inlet, and the online measurement apparatus also includes a nitrogen blowing pipeline and a second suction device, one end of the nitrogen blowing pipeline is connected to a nitrogen distribution system, the other end of the nitrogen blowing pipeline is connected to the nitrogen inlet, and the second suction device is arranged on the nitrogen blowing pipeline.

Preferably, the detector is a high-purity germanium detector.

Preferably, the in-situ gamma spectrometer system also includes a refrigeration plant and a UPS power supply, the refrigeration plant is arranged on the detector, and the UPS power supply is electrically connected to the refrigeration plant and the detector to provide a power supply.

Preferably, in-situ gamma spectrometer system also includes a high voltage module, a first preamplifier, and a first main amplifier, the high voltage module and the first preamplifier are connected to a detection module, and the first main amplifier is connected between the first preamplifier and the digital spectrometer.

Preferably, the in-situ gamma spectrometer system also includes a signal analysis host, the signal analysis host is equipped with a spectrum resolving software and a passive efficiency calibrating software, to analyze the digital signal stored in the digital spectrometer and obtain the type and the activity of a radionuclide in the sample.

Preferably, the online measurement apparatus includes a measurement console connected to the signal analysis host, to realize remote operation of the in-situ gamma spectrometer system by a staff member.

Preferably, online measurement apparatus for inert gas in a gaseous effluent from a nuclear facility also includes an anti-compton system, the anti-compton system includes a secondary detector and an anti-coincidence circuit, one end of the secondary detector is connected to the high voltage module and the other end of the secondary detector is connected to the anti-coincidence circuit, the first main amplifier is connected to the anti-coincidence circuit, and the other end of the anti-coincidence circuit is connected with the digital spectrometer.

Preferably, the anti-compton system includes a second preamplifier and a second main amplifier, and the second preamplifier and the second main amplifier are arranged between the secondary detector and the anti-coincidence circuit.

Preferably, the sampling system is a preconcentration sampling system and a preconcentration method includes pressure concentration and hollow fiber membrane enrichment.

Another embodiment of the present invention provides an on-line measurement method of an online measurement apparatus for inert gas in a gaseous effluent from a nuclear facility of the present invention, including the steps of:

cleaning the sampling container and carrying out a sampling process after a measurement reaches the standard;

starting the refrigeration plant, to make the detector reach the working temperature;

sampling from a chimney by the sampling system and closing the sampling system after sending a gaseous effluent sample to the sampling container;

starting the detector and measuring the sample, obtaining the gamma energy spectrum of the sample after the measured data are processed by digital spectrometer;

a spectrum resolving software of the in-situ gamma spectrometer system giving the types of the radionuclide in a gaseous effluent sample and total peak counting rates of the radionuclide;

the signal analysis host calling an efficiency calibration curve corresponding to the measured sample in the passive efficiency calibrating software according to the types of the radionuclide and total peak counting rate given by the spectrum resolving software, and calculating the activity concentration of the inert gas in the gaseous effluent according to the formula:

$$A_V(E) = \frac{C(E)}{\varepsilon(E)p(E)V}$$

wherein E is a characteristic ray energy of a radionuclide, $A_V(E)$ is a volume activity of the radionuclide in which the characteristic ray energy is E, and C (E) is the total peak counting rate of the energy, $p(E)$ is the branching ratio of the characteristic ray, $\varepsilon(E)$ is efficiency scale factor, V is the volume of sampling container;

the sample returning to the chimney through the exhaust line after all measurements have been made.

In view of the foregoing, the online measurement apparatus for inert gas in a gaseous effluent from a nuclear facility of present invention has the following advantages:

1. The types and activity concentration of the radionuclide in the gaseous effluents can be measured directly, and the activity concentration of the radioactive inert gases in the effluents can be calculated, to meet the national monitoring requirements of gaseous radioactive effluents.

2. On-line spectrum measurement, nuclide identification and accurate activity measurement can be realized for effluent monitoring, to enhance the capability of effluent monitoring and meet the needs of supervisory monitoring of the audit department for effluent monitoring at nuclear facilities, which will help to improve the timeliness of data and effectively reflect the operation state of ventilation and discharge systems at nuclear facilities.

3. The volume and measuring time of the sampling container meet the requirements of $^{85}$Kr detection limit $10^4$Bq/m$^3$.

4. The embodiment of the present invention adopts automatic remote control to realize accurate, automatic, efficient and reliable measurement of inert gas gamma spectrum of gaseous effluents.

## BRIEF DESCRIPTION OF THE DRAWINGS

The technical solution of the present invention will now be described more clearly in view of the drawings. The drawings described below only show some embodiments of the present invention. Obviously, based on the provided drawings, one ordinary skilled in the art can obtain other drawings without creative work.

Fig. 1 is a schematic diagram of an online measurement apparatus for inert gas in a gaseous effluent from a nuclear facility according to a first embodiment of the present invention;

Fig. 2 is a schematic diagram of a sampling system;

Figure 3 is a schematic diagram of a sampling system and a sampling container in connection with each other;

Fig. 4 is a schematic diagram of a sampling container and a detector in connection with each other;

Fig. 5 is a schematic diagram of a partial circuit of an in situ gamma spectrometer system according to the first embodiment of the present invention;

Fig. 6 is a schematic diagram of an online measurement apparatus for inert gas in a gaseous effluent from a nuclear facility according to a second embodiment of the present invention;

Fig. 7 is a schematic diagram of a partial circuit of an in situ gamma spectrometer system according to the second embodiment of the present invention.

## DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

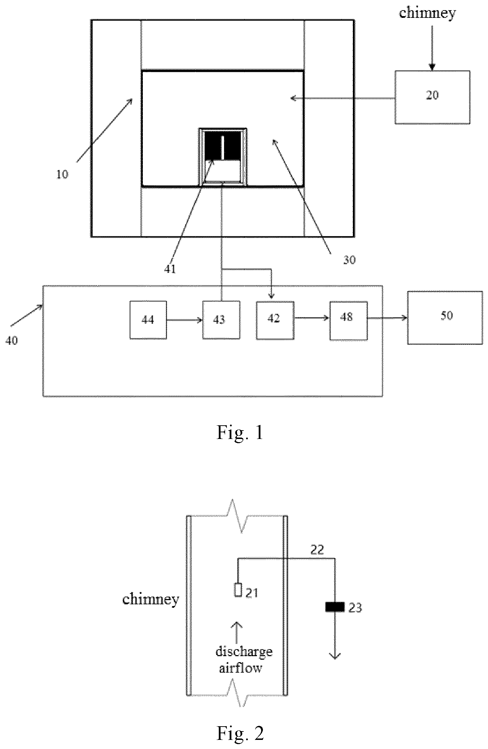

Referring to Fig. 1, a first embodiment of the present invention provides an online measurement apparatus for inert gas in a gaseous effluent from a nuclear facility, including:
a shielding apparatus 10, a sampling system 20, a sampling container 30 and an in-situ gamma spectrometer system 40, wherein the sampling container 30 includes a sample gas inlet and a sampling port, the in-situ gamma spectrometer system 40 includes a detector 41 and a digital spectrometer 42, the shielding apparatus 10 is arranged outside the sampling container 30 in a covering manner, the sampling system 20 is in communication with the sample gas inlet to convey a gaseous effluent to be tested to the sampling container 30, the detector 41 is arranged at a position close to the sampling port to test the gaseous effluent in the sampling container 30, and send a testing signal obtained by testing to the digital spectrometer 42.

Referring also to Figs. 2 to 4, in the present embodiment, the sampling system 20 includes a sampling nozzle 21 for connection to a chimney, a sampling line 22 and a first suction device 23, one end of the sampling pipeline 22 is connected to the sampling nozzle 21, the other end of the sampling pipeline 22 is connected to the sample gas inlet, and the first suction device 23 is arranged on the sampling line 22.

In particular, in the present embodiment, the first suction device 23 starts to suck the exhaust when in operation, so that the sampling nozzle 21 can extract a gaseous effluent from the chimney, the gaseous effluent flows into the sampling container 30 through the sampling line 22.

In the present embodiment, the sampling container 30 can be a Marin cup sampling container, wherein, in order to optimize the detection efficiency of the gaseous effluents, the optimal structure can be obtained as a Marin cup shape according to the simulation calculation. In the present embodiment, the Marin cup sampling container has a radius of 161.5mm and a height of 230.7mm. The center of the sampling container 30 is provided with a hole for placing the detector 41, the radius of the hole is 48.0 mm. Of course, it should be noted that, in other embodiments of the present invention, the size of the sampling container 30 can be designed according to actual needs.

In the present embodiment, to have good low-energy photon transmittance, the sampling container 30 is made from an aluminum alloy with a thickness of 2mm. Of course, it should be noted that, in other embodiments of the present invention, the material and thickness of the sampling container 30 can be selected according to actual needs.

It should be noted that, in the present embodiment, the volume of the sampling container 30 is selected to match the sampling time to meet the requirement of $^{85}Kr$ detection limit $10^4 Bq/m^3$, while reserving a 20% design margin. Both the radial and axial dimensions of the sampling container 30 were simulated by Monte Carto software to achieve optimal detection efficiency at the same volume.

In the present embodiment, the shielding apparatus 10 is arranged outside the sampling container 30 in a covering manner, wherein the shielding apparatus 10 has a cylindrical shape, the shell of the shielding apparatus 10 includes a first metal layer 11, a second metal layer 12 and a third metal layer 13. The first metal layer 11 is a steel layer with a thickness of 2mm, the second metal layer 12 is a lead layer with a thickness of 100 mm, and the third metal layer 13 is a copper layer with a thickness of 2mm. Due to the use of steel, lead, copper multi-layer shielding design, the gamma rays in the background of the environment and the characteristic x-rays emitted by the shielding material in the process of interacting with photons during the gamma-ray spectroscopy measurements of inert gases in the gaseous effluents are shielded, which can reduce the environment background and the detection limit at the same time.

In the present embodiment, the sampling container 30 also includes a nitrogen inlet, and the online measurement apparatus also includes a nitrogen blowing pipeline 24 and a second suction device 25, one end of the nitrogen blowing pipeline 24 is connected to a nitrogen distribution system, the other end of the nitrogen blowing pipeline 24 is connected to the nitrogen inlet, and the second suction device 25 is arranged on the nitrogen blowing pipeline 24.
wherein the nitrogen blowing pipeline 24 is used to obtain nitrogen from the nitrogen distribution system and is pumped into the sampling container 30 through the second suction device 25, which is mainly used for blowing the inside of the sampling container 30 between two measurements to prevent the sample of the previous measurement from remaining in the sampling container 30. After blowing, the nitrogen is sent to the chimney through the pipeline and discharged into the environment.

In the present embodiment, the detector 41 is a high-purity germanium detector.
wherein high-purity germanium (HPGe) detector can produce electrical pulse signal by interacting with γ-ray emitted by inert gas in the measured gaseous effluent. In particular, in the present embodiment, the detector 41 is an HPGe detector with an energy resolution of: 2.2 Kev (γ-ray of 1332 kev from a $^{60}Co$ source) and 1.0 kev (γ-ray of 122 kev from a $^{60}Co$ source).

In the present embodiment, the in-situ gamma spectrometer system 40 includes a refrigeration plant 43, which is disposed on the detector 41, and a UPS power supply 44. The UPS power supply 44 is electrically connected to the refrigeration plant 43 and the detector 41 to provide a power supply.

wherein the refrigeration plant 43 provides low-temperature working conditions for the detector 41, in particular, the refrigeration plant 43 adopts an electric refrigeration technology.

wherein UPS power supply 44 can continue to provide supply power to HPGe detector and refrigeration plant 43 in case of power supply failure, so that it can still monitor the emission of chimney gaseous effluents in case of accident.

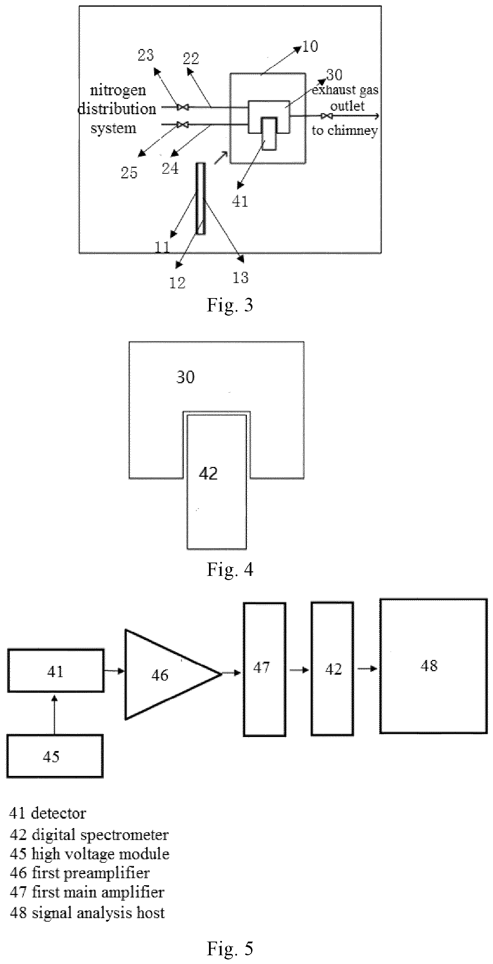

Referring to Fig. 5, in the present embodiment, the in situ gamma spectrometer system 40 also includes a high-voltage module 45, a first preamplifier 46, a first main amplifier 47, and a signal analysis host 48, wherein the high-voltage module 45 and the first preamplifier 46 are connected to the detector 41, and the first main amplifier 47 is connected between the first preamplifier 46 and the digital spectrometer 42. The signal analysis host 48 is equipped with a spectrum resolving software and a passive efficiency calibration software, to analyze the digital signal stored in the digital spectrometer 42 and obtain the type and the activity of a radionuclide in the sample.

wherein the signal collected by the detector 41 is amplified and shaped by the first preamplifier 46 and the first main amplifier 47 respectively, can be sent to a digital-to-analog converter and a multi-channel pulse amplitude analyzer to convert the electrical pulse signal into a digital signal for storage in the digital spectrometer 42. The digital spectrometer 42 sends the digital signal to the signal analysis host 48, the analysis and calculation are carried out by the software in the signal analysis host 48.

wherein the software includes spectrum resolving software and a passive efficiency calibrating software, the digital signal from the digital spectrometer 42 can be analyzed by the spectrum resolving software and the passive efficiency calibrating software, to obtain the types of the nuclide and the radioactivity thereof.

In the present embodiment, the online measurement apparatus for inert gas in a gaseous effluent from a nuclear facility also includes a measurement console 50 connected to the signal analysis host 48, to realize remote operation of the in-situ gamma spectrometer system 40 by a staff member.

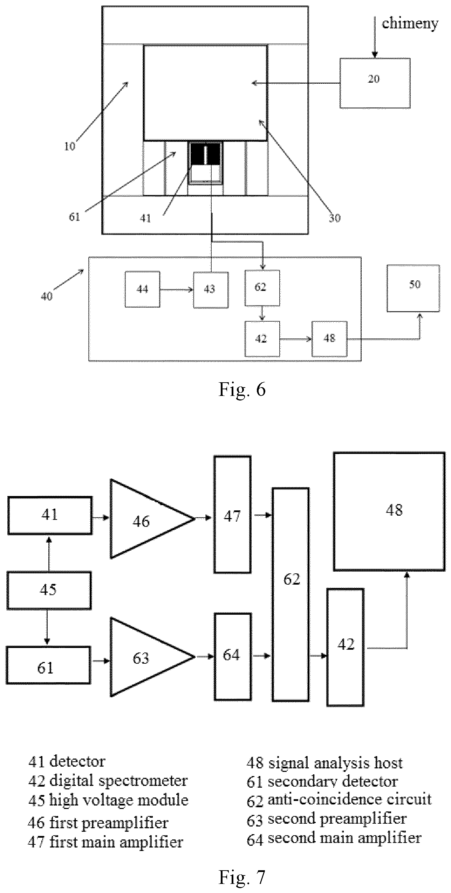

Referring to Figs. 6 and 7, Fig. 6 is an online measurement apparatus for inert gas in a gaseous effluent from a nuclear facility according to the second embodiment of the present invention. Compared with the first embodiment, the second embodiment mainly adds an anti-compton system. The sampling system 20 is a preconcentration sampling system and a preconcentration method includes pressure concentration and hollow fiber membrane enrichment.

The main function is direct measurement under pressure enrichment, which has high detection accuracy and can effectively reduce the influence of Compton scattering photons on the $^{85}$Kr characteristic peak. It is suitable for preconcentration of samples by pressure and the background of Compton scattering photons at 514 kev ($^{85}$Kr characteristic peak) is high.

In particular, in the present embodiment, the anti-compton system includes a secondary detector 61, an anti-coincidence circuit 62, a second preamplifier 63, a second main amplifier 64, one end of the secondary detector 61 is connected to the high-voltage module 45, and the other end of the secondary detector 61 is connected to the anti-coincidence circuit 62 through a second preamplifier 63 and a second main amplifier 64; The first main amplifier 47 is connected with the anti-coincidence circuit 62, and the other end of the anti-coincidence circuit 62 is connected with the digital spectrometer 42.

BGO bismuth germanate scintillator are available for secondary detector 61 having a ring thickness of 55mm, a length of 165.8mm long and is equipped with 3-4 photomultiplier tubes. The secondary detector 61 can be optimized by the Monte Carto code to optimize the secondary photon rate at an acceptable volume and ultimately achieve optimal anti-kang efficiency.

wherein, the sampling container 30 has a cylindrical shape having a height of 251.5mm, a radius of 150.9mm. Subject to Monte Carto software simulation optimization, the highest detection efficiency is obtained with the same volume.

wherein the anti-coincidence circuit 62 is used for processing the output signals of the secondary detector 61 and the high-purity germanium detector 41 to reduce the Compton Ping.

The online measurement process of the first and second embodiments of the present invention will be described in detail as following:

(1) the nitrogen blowing system first cleaning the sampling container 30, and carrying out the sampling process after the measurement reaches the standard, and sending the used nitrogen to the chimney via the pipeline.

(2) starting the refrigerating plant 43 to make the HPGe detector 41 reach the working temperature.

(3) sampling from the chimney and closing the sampling system20 after sending the gaseous effluent sample to the sampling container 30. In the case of a preconcentration sampling system, preconcentrating the sample and sending the sample to the sampling container 30.

(4) starting the detector 41 and measuring the sample for 7 hours, obtaining the gamma energy spectrum of the sample after the measured data are processed by digital spectrometer 42.

(5) a spectrum resolving software of the in-situ gamma spectrometer system 40 giving the types of the radionuclide in a gaseous effluent sample and total peak counting rates of the radionuclide.

(6) the signal analysis host 48 calling an efficiency calibration curve corresponding to the measured sample in the passive efficiency calibrating software according to the types of the radionuclide and total peak counting rate given by the spectrum resolving software, and calculating the activity concentration of the inert gas in the gaseous effluent according to the formula.

$$A_v(E) = \frac{C(E)}{\varepsilon(E)p(E)V}$$

wherein E is a characteristic ray energy of a radionuclide, $A_v(E)$ is a volume activity of the radionuclide in which the characteristic ray energy is E, and C (E) is the total peak counting rate of the energy, $p(E)$ is the branching ratio of the characteristic ray, $\varepsilon(E)$ is efficiency scale factor, V is the volume of sampling container 30. Data and alarm information will be transmitted to the measurement console 50.

(7) the sample returning to the chimney through the exhaust line after all measurements have been made.

Table 1 is a comparison table of the theoretical performance parameters of the on-line measuring apparatus according to the first embodiment of the present invention and the on-line measuring apparatus according to the second embodiment of the present invention.

Table 1 theoretical performance parameters of on-line gamma spectrum measurement device

| Name of nuclide | Test time/h | MDAC1/(Bq/m$^3$) | MDAC2/(Bq/m$^3$) |
|---|---|---|---|
| $^{85m}$Kr | 7 | 57 | 46 |
| $^{85}$Kr | 7 | 7347 | 5694 |
| $^{87}$Kr | 7 | 186 | 141 |
| $^{88}$Kr | 7 | 239 | 185 |
| $^{133m}$Xe | 7 | 319 | 245 |
| $^{133}$Xe | 7 | 153 | 171 |
| $^{135}$Xe | 7 | 49 | 38 |
| $^{41}$Ar | 7 | 212 | 89 |

wherein MDAC1 represents the minimum detection limit of the second embodiment and MDAC2 represents the minimum detection limit of the first embodiment.

In view of the foregoing, the online measurement apparatus for inert gas in a gaseous effluent from a nuclear facility according to the first and second embodiments of the present invention have the following advantages:

1. Two embodiments of the present invention can be used to directly measure the type and the activity concentration of a radionuclide in a gaseous effluent sample, the activity concentration of a radioactive inert gas in the effluent can be calculated, thereby satisfying the requirements relating to gaseous radioactive effluent monitoring.

2. The two embodiments of the present invention can realize on-line spectrum measurement of the effluent monitoring, the nuclide identification and accurate activity measurement can be realized for effluent monitoring, to enhance the capability of effluent monitoring and meet the needs of supervisory monitoring of the audit department for effluent monitoring at nuclear facilities, which will help to improve the timeliness of data and effectively reflect the operation state of ventilation and discharge systems at nuclear facilities.

3. The volume and measuring time of the sampling container of the two embodiments of the present invention meet the requirements of $^{85}$Kr detection limit $10^4$Bq/m$^3$.

4. The two embodiments of the present invention adopt automatic remote control to realize accurate, automatic, efficient and reliable measurement of inert gas gamma spectrum of gaseous effluents.

5. The two embodiments of the present invention can respond to different measurement requirements. The first embodiment can be applied to the case of a lower Compton background at 514 kev with the advantages of an atmospheric operation and a lower detection limit of $^{85}$Kr. The second embodiment can greatly reduce the influence of Compton scattering, making the 514kev characteristic peak of $^{85}$Kr easier to be recognized, and is suitable for the case of high Compton background at 514kev.

Obviously, the embodiments described above are only a part of the embodiments of the present application, not all embodiments of the present invention. The drawings only show some preferable embodiments of the present invention, but do not limit the scope of the present invention. The present invention may be implemented in many different forms and, conversely, the embodiments are provided with the aim of providing a more thorough understanding of the present invention. Although the present invention is described in detail in light of the preceding embodiments, one ordinary skilled in the art may modify the technical solutions described in the preceding specific implementation modalities, or some of the technical characteristics of the equivalent replacement. The same applies to any direct or indirect use of the equivalent structure of the specification and the attached drawings in other related technical fields.

## Claims

1. An online measurement apparatus for inert gas in a gaseous effluent from a nuclear facility, **characterized in that** the online measurement apparatus for inert gas in a gaseous effluent from a nuclear facility comprises a shielding apparatus (10), a sampling system (20), a sampling container (30) and an in-situ gamma spectrometer system (40), wherein the sampling container (30) comprises a sample gas inlet and a sampling port, the in-situ gamma spectrometer system (40) comprises a detector (41) and a digital spectrometer (42), the shielding apparatus (10) is arranged outside the sampling container (30) in a covering manner, the sampling system (20) is in communication with the sample gas inlet to convey a gaseous effluent to be tested to the sampling container (30), the detector (41) is arranged at a position close to the sampling port to test the gaseous effluent in the sampling container (30), and send a testing signal obtained by testing to the digital spectrometer (42).

2. The online measurement apparatus for inert gas in a gaseous effluent from a nuclear facility of claim 1, **characterized in that** the sampling system (20) comprises a sampling nozzle (21) for connection to a chimney, a sampling line (22) and a first suction device (23), one end of the sampling pipeline (22) is connected to the sampling nozzle (21), the other end of the sampling pipeline (22) is connected to the sample gas inlet, and the first suction device (23) is arranged on the sampling line (22).

3. The online measurement apparatus for inert gas in a gaseous effluent from a nuclear facility of claim 1, **characterized in that** the shielding apparatus (10) has a cylindrical shape and a shell of the shielding apparatus (10) comprises a first metal layer (11), a second metal layer (12) and a third metal layer (13), the first metal layer (11) is a steel layer having a thickness of 2mm, the second metal layer (12) is a lead layer having a thickness of 100 mm, and the third metal layer (13) is a copper layer having a thickness of 2mm.

4. The online measurement apparatus for inert gas in a gaseous effluent from a nuclear facility of claim 1, **characterized in that** the sampling container (30) is a Marin cup sampling container.

5. The online measurement apparatus for inert gas in a gaseous effluent from a nuclear facility of claim 2, **characterized in that** the sampling container (30) also comprises a nitrogen inlet, and the online measurement apparatus also comprises a nitrogen blowing pipeline (24) and a second suction device (25), one end of the nitrogen blowing pipeline (24) is connected to a nitrogen distribution system, the other end of the nitrogen blowing pipeline (24) is connected to the nitrogen inlet, and the second suction device (25) is arranged on the nitrogen blowing pipeline (24).

6. The online measurement apparatus for inert gas in a gaseous effluent from a nuclear facility of claim 1, **characterized in that** the detector (41) is a high-purity germanium detector.

7. The online measurement apparatus for inert gas in a gaseous effluent from a nuclear facility of claim 1, **characterized in that** the in-situ gamma spectrometer system (40) also comprises a refrigeration plant (43) and a UPS power supply (44), the refrigeration plant (43) is arranged on the detector (41), and the UPS power supply (44) is electrically connected to the refrigeration plant (43) and the detector (41) to provide a power supply.

8. The online measurement apparatus for inert gas in a gaseous effluent from a nuclear facility of claim 1, **characterized in that** the in-situ gamma spectrometer system (40) also comprises a high voltage module, a first preamplifier (46), and a first main amplifier (47), the high voltage module (45) and the first preamplifier (46) are connected to a detection module, and the first main amplifier (47) is connected between the first preamplifier (47) and the digital spectrometer (42).

9. The online measurement apparatus for inert gas in a gaseous effluent from a nuclear facility of claim 8, **characterized in that** the in-situ gamma spectrometer system (40) also comprises a signal analysis host (48), the signal analysis host (48) is equipped with a spectrum resolving software and a passive efficiency calibrating software, to analyze the digital signal stored in the digital spectrometer (42) and obtain the type and the activity of a radionuclide in the sample.

10. The online measurement apparatus for inert gas in a gaseous effluent from a nuclear facility of claim 9, **characterized in that** the online measurement apparatus comprises a measurement console (50) connected to the signal analysis host (48), to realize remote operation of the in-situ gamma spectrometer system (40) by a staff member.

11. The online measurement apparatus for inert gas in a gaseous effluent from a nuclear facility of claim 8, **characterized in that** the online measurement apparatus for inert gas in a gaseous effluent from a nuclear facility also comprises an anti-compton system, the anti-compton system comprises a secondary detector (61) and an anti-coincidence circuit (62), one end of the secondary detector (61) is connected to the high voltage module (45) and the other end of the secondary detector (61) is connected to the anti-coincidence circuit (62), the first main amplifier (47) is connected to the anti-coincidence circuit (62), and the other end of the anti-coincidence circuit (62) is connected with the digital spectrometer (42).

12. The online measurement apparatus for inert gas in a gaseous effluent from a nuclear facility of claim 11, **characterized in that** the anti-compton system comprises a second preamplifier (63) and a second main amplifier (64), and the second preamplifier (63) and the second main amplifier (64) are arranged between the secondary detector (61) and the anti-coincidence circuit (62).

13. The online measurement apparatus for inert gas in a gaseous effluent from a nuclear facility of claim 11, **characterized in that** the sampling system (20) is a preconcentration sampling system and a preconcentration method comprises pressure concentration and hollow fiber membrane enrichment.

14. An online measurement method of an online measurement apparatus for inert gas in a gaseous effluent from a nuclear facility of anyone of claims 1 to 13, **characterized in that** the online measurement method comprises the steps of:

cleaning the sampling container (30) and carrying out a sampling process after a measurement reaches the standard;
starting the refrigeration plant (43), to make the detector (41) reach the working temperature;
sampling from a chimney by the sampling system (20) and closing the sampling system (20) after sending a gaseous effluent sample to the sampling container (30);
starting the detector (41) and measuring the sample, obtaining the gamma energy spectrum of the sample after the measured data are processed by digital spectrometer (42);
a spectrum resolving software of the in-situ gamma spectrometer system (40) giving the types of the radionuclide in a gaseous effluent sample and total peak counting rates of the radionuclide;
the signal analysis host (48) calling an efficiency calibration curve corresponding to the measured sample in the passive efficiency calibrating software according to the types of the radionuclide and
total peak counting rate given by the spectrum resolving software, and calculating the activity concentration of the inert gas in the gaseous effluent according to the formula:

$$A_V(E) = \frac{C(E)}{\varepsilon(E)p(E)V}$$

wherein E is a characteristic ray energy of a radionuclide, $A_V(E)$ is a volume activity of the radionuclide in which the characteristic ray energy is E, and C (E) is the total peak counting rate of the energy, $p(E)$ is the branching ratio of the characteristic ray, $\varepsilon(E)$ is efficiency scale factor, V is the volume of sampling container (30);
the sample returning to the chimney through the exhaust line after all measurements have been made.

Fig. 1

Fig. 2

Fig. 3

Fig. 4

41 detector
42 digital spectrometer
45 high voltage module
46 first preamplifier
47 first main amplifier
48 signal analysis host

Fig. 5

Fig. 6

41 detector
42 digital spectrometer
45 high voltage module
46 first preamplifier
47 first main amplifier

48 signal analysis host
61 secondary detector
62 anti-coincidence circuit
63 second preamplifier
64 second main amplifier

Fig. 7

## INTERNATIONAL SEARCH REPORT

| | International application No. |
|---|---|
| | **PCT/CN2020/134716** |

| **A.** | **CLASSIFICATION OF SUBJECT MATTER** |
|---|---|

G21C 17/07(2006.01)i;  G21C 17/14(2006.01)i;  G21D 1/02(2006.01)i

According to International Patent Classification (IPC) or to both national classification and IPC

| **B.** | **FIELDS SEARCHED** |
|---|---|

Minimum documentation searched (classification system followed by classification symbols)

G21C17/-,G21D1/-

Documentation searched other than minimum documentation to the extent that such documents are included in the fields searched

Electronic data base consulted during the international search (name of data base and, where practicable, search terms used)

CNPAT, CNKI, EPODOC, WPI: 中广核工程有限公司, 中国广核集团有限公司, 中国广核电力股份有限公司, 惰性, 气体, 核, 放射性, 测量, 探测, 在线, 实时, 伽马, 谱, 活度浓度, 种类, 屏蔽, 马林杯, 反康普顿, 浓集, 富集, 高纯锗, on w line, real w time, gas, nuclear, measur+, detect+, monitor+, Gamma, spectrometer, shield+, HPGe, activity, concentration, radioactive

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 104166154 A (CHINA NUCLEAR POWER ENGINEERING CO., LTD.) 26 November 2014 (2014-11-26) description paragraphs [0002], [0005], [0020], [0033]-[0047], figures 1-3 | 1-7 |
| Y | CN 104166154 A (CHINA NUCLEAR POWER ENGINEERING CO., LTD.) 26 November 2014 (2014-11-26) description paragraphs [0002], [0005], [0020], [0033]-[0047], figures 1-3 | 8-14 |
| Y | CN 109283568 A (YANGJIANG NUCLEAR POWER CO., LTD. et al.) 29 January 2019 (2019-01-29) description, paragraphs [0029]-[0077], and figures 1-8 | 8-14 |
| Y | 周春林 等 (ZHOU, Chunlin et al.). "基于HPGeγ谱仪的粉煤灰天然放射性测量 (Crude Radioactivity Measure of Coal Dust Based on HPGe γ-ray Spectrometer)" 核电子学与探测技术 (Nuclear Electronics & Detection Technology), Vol. 29, No. 2, 31 March 2009 (2009-03-31), ISSN: 0258-0934, sections 1-3, and figures 1-2 | 11-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 June 2021** | **30 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/134716** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 209374071 U (SUZHOU NUCLEAR POWER RESEARCH INSTITUTE et al.) 10 September 2019 (2019-09-10)<br>    entire document | 1-14 |
| A | CN 106873021 A (CHINA NUCLEAR SECURITY TECHNOLOGY CO., LTD.) 20 June 2017 (2017-06-20)<br>    entire document | 1-14 |
| A | CN 107272044 A (INSTITUTE OF NUCLEAR PHYSICS AND CHEMISTRY, CHINA ACADEMY OF ENGINEERING PHYSICS) 20 October 2017 (2017-10-20)<br>    entire document | 1-14 |
| A | CN 108415065 A (SHANGHAI SIM-MAX TECHNOLOGY CO., LTD.) 17 August 2018 (2018-08-17)<br>    entire document | 1-14 |
| A | US 4092541 A (KRAFTWERK UNION AG.) 30 May 1978 (1978-05-30)<br>    entire document | 1-14 |

Form PCT/ISA/210 (second sheet) (January 2015)

**INTERNATIONAL SEARCH REPORT**
**Information on patent family members**

International application No.

**PCT/CN2020/134716**

| Patent document cited in search report | | | Publication date (day/month/year) | Patent family member(s) | | | Publication date (day/month/year) |
|---|---|---|---|---|---|---|---|
| CN | 104166154 | A | 26 November 2014 | GB | 2529514 | B | 15 November 2017 |
| | | | | GB | 2529514 | A | 24 February 2016 |
| | | | | CN | 104166154 | B | 15 February 2017 |
| CN | 109283568 | A | 29 January 2019 | CN | 109283568 | B | 17 July 2020 |
| CN | 209374071 | U | 10 September 2019 | None | | | |
| CN | 106873021 | A | 20 June 2017 | None | | | |
| CN | 107272044 | A | 20 October 2017 | CN | 107272044 | B | 15 January 2019 |
| CN | 108415065 | A | 17 August 2018 | None | | | |
| US | 4092541 | A | 30 May 1978 | CH | 607023 | A5 | 30 November 1978 |
| | | | | DE | 2536897 | B1 | 27 January 1977 |
| | | | | FR | 2321693 | A1 | 18 March 1977 |
| | | | | JP | S5226290 | A | 26 February 1977 |

Form PCT/ISA/210 (patent family annex) (January 2015)

**REFERENCES CITED IN THE DESCRIPTION**

**Patent documents cited in the description**

- GB 62492011 A